# DEMANDE DE BREVET EUROPEEN

(11) **EP 3 300 879 A1**
(43) Date de publication de la demande: **04.04.2018**
(21) Numéro de dépôt: 17191861.8
(22) Date de dépôt: 19.09.2017
(51) Int. Cl.: B29D 24/00, B29C 65/48, B29C 65/00, B32B 27/28, B32B 27/30

(54) **PROCEDE DE FABRICATION D'UN PANNEAU ACOUSTIQUE RENFORCE PAR AU MOINS UNE COUCHE EN MATERIAU COMPOSITE THERMOPLASTIQUE**

(30) Priorité: 03.10.2016 FR 1659481
(71) Demandeur: Airbus Operations S.A.S., 31060 Toulouse (FR)
(72) Inventeur: RAVISE, Florian, 44000 NANTES (FR); MENAY, Hassan, 44300 NANTES (FR)
(74) Mandataire: Gicquel, Olivier Yves Gérard

(57) **Abrégé**

Un procédé de fabrication d'un panneau acoustique comportant au moins une couche acoustiquement résistive (12), au moins une structure alvéolaire (14) et une paroi réflectrice (16), le procédé comprenant les étapes de :
- dépose des parties (12, 14) du panneau acoustique en matériau composite thermodurcissable,
- dépose d'un film (20) en résine thermoplastique miscible avec le matériau composite thermodurcissable à la température de polymérisation dudit matériau composite thermodurcissable,
- polymérisation des parties du panneau acoustique en matériau composite thermodurcissable,
- dépose et consolidation d'au moins une couche (22) en matériau composite thermoplastique contre le film (20) en résine thermoplastique pour former la paroi réflectrice (16).

## Description

La présente demande se rapporte à un procédé de fabrication d'un panneau acoustique renforcé par au moins une couche en matériau composite thermoplastique.

Selon un mode de réalisation, un panneau acoustique comprend une couche acoustiquement résistive, une structure alvéolaire et une paroi réflectrice qui sont toutes en matériau composite thermodurcissable.

Pour la présente demande, un élément en matériau composite comprend des fibres noyées dans une matrice en résine. La résine peut être :
- Une résine thermoplastique qui se ramollit d'une façon répétée lorsqu'elle est chauffée au-dessus d'une température déterminée et qui redevient dure au-dessous de la température déterminée,
- Une résine thermodurcissable qui devient solide irréversiblement lors d'une étape de polymérisation.

Selon un mode opératoire, le procédé de fabrication d'un panneau acoustique en matériau composite thermodurcissable comprend deux étapes de polymérisation.

Lors d'une première étape de polymérisation, on réalise la couche acoustiquement résistive en intégrant éventuellement des cornières pour former des chants du panneau acoustique. Lors d'une deuxième étape de polymérisation, la structure alvéolaire renforcée par la couche réflectrice est intégrée sur la couche acoustiquement résistive.

La réalisation de deux polymérisations successives peut s'avérer difficile à mettre en oeuvre, notamment pour obtenir une accroche satisfaisante au niveau de l'interface entre la structure alvéolaire et la couche acoustiquement résistive.

Selon une autre problématique, le panneau acoustique en matériau composite thermodurcissable peut difficilement être renforcé en apposant sur la paroi réflectrice au moins une couche en matériau composite thermoplastique à hautes performances car la consolidation de ladite couche nécessite une élévation de température comprise entre 300°C et 400°C qui est incompatible avec les matériaux composites thermodurcissables, ainsi qu'avec ceux constituant la structure alvéolaire.

La présente invention vise à remédier aux inconvénients de l'art antérieur.

A cet effet, l'invention a pour objet un procédé de fabrication d'un panneau acoustique comportant au moins une couche acoustiquement résistive, au moins une structure alvéolaire et une paroi réflectrice, caractérisé en ce que le procédé comprend des étapes de :
- Dépose d'au moins une couche configurée pour former la couche acoustiquement résistive,
- Dépose de la structure alvéolaire en matériau composite thermodurcissable,
- Dépose d'un film en résine thermoplastique configuré pour être miscible avec le matériau composite thermodurcissable à la température de polymérisation dudit matériau composite thermodurcissable,
- Polymérisation des parties du panneau acoustique en matériau composite thermodurcissable,
- Dépose d'au moins une couche en matériau composite thermoplastique contre le film en résine thermoplastique, ladite couche étant configurée pour former au moins une partie de la paroi réflectrice,
- Consolidation de la couche et du film en matériau composite thermoplastique pour former la paroi réflectrice.

Le procédé de fabrication ne comprend qu'une étape de polymérisation ce qui contribue à le simplifier. Selon un autre aspect, le film en résine thermoplastique permet d'obtenir une bonne accroche entre la couche en matériau composite thermoplastique et le reste du panneau acoustique en matériau composite thermodurcissable.

Selon une autre caractéristique, la couche en matériau composite thermoplastique de la paroi réflectrice est consolidée en continu.

Selon une autre caractéristique, la couche en matériau composite thermoplastique et le film en résine thermoplastique sont chauffés localement et concomitamment, juste avant d'être mis en contact.

Selon une autre caractéristique, la couche en matériau composite thermoplastique est plaquée contre le film en résine thermoplastique grâce à un rouleau configuré pour presser la couche sur le film.

Selon une autre caractéristique, la couche en matériau composite thermoplastique est mise en tension avant d'être pressée par le rouleau.

Selon un mode de réalisation, le film est en polyétherimide ou en polyfluorure de vinylidène. Selon un mode de réalisation, la paroi réflectrice est réalisée en matériau composite thermoplastique, le film de résine thermoplastique étant positionné entre la structure alvéolaire et la paroi réflectrice.

L'invention a également pour objet un panneau acoustique obtenu à partir du procédé selon l'une des caractéristiques précédentes.

D'autres caractéristiques et avantages ressortiront de la description de l'invention qui va suivre de l'invention, description donnée à titre d'exemple uniquement, en regard des dessins annexés sur lesquels :
- La figure 1 est une coupe d'un panneau acoustique qui illustre un mode de réalisation de l'invention,
- Les figures 2A à 2C sont des schémas qui illustrent un procédé de fabrication d'un panneau acoustique selon l'invention.

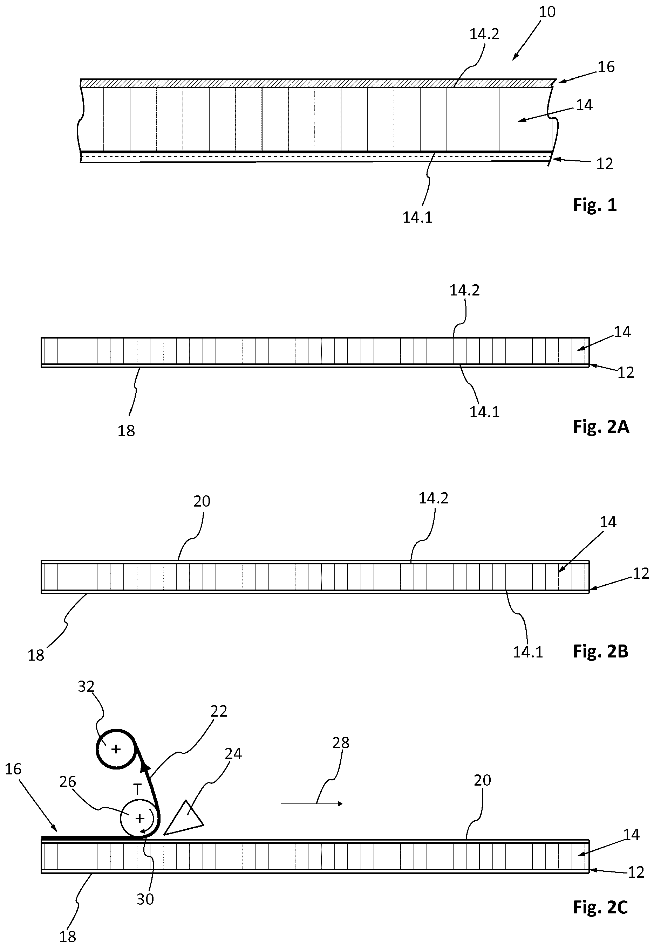

Selon un mode de réalisation illustré par la figure 1, un panneau acoustique 10 comprend une couche acoustiquement résistive 12, une structure alvéolaire 14 et une paroi réflectrice 16. Par couche, on entend une ou plusieurs couches intimement liées.

En variante, le panneau acoustique comprend plusieurs structures alvéolaires 14 séparées par des couches acoustiquement résistives appelées chacune septum.

Chaque structure alvéolaire 14 comprend une première face 14.1 reliée à la couche acoustiquement résistive 12 et une deuxième face 14.2 reliée à la paroi réflectrice 16.

Selon un premier mode de réalisation, le procédé de fabrication comprend des étapes de :
- Dépose d'au moins une couche 18 en matériau thermodurcissable, en matériau métallique ou autre, configurée pour former la couche acoustiquement résistive 12,
- Dépose de la structure alvéolaire 14 en matériau thermodurcissable sur la couche 18, la première face 14.1 étant en contact avec la couche 18, comme illustré sur la figure 2A,
- Dépose d'un film 20 en résine thermoplastique configuré pour être miscible avec le matériau thermodurcissable de la structure alvéolaire à sa température de polymérisation, comme illustré sur la figure 2B,
- Polymérisation de la couche acoustiquement résistive 12 et de la structure alvéolaire 14,
- Dépose d'au moins une couche 22 en matériau thermoplastique contre le film 20 en résine thermoplastique,
- Consolidation de la couche 22 et du film 20 en matériau composite thermoplastique pour former la paroi réflectrice 16.

Selon ce premier mode de réalisation, toute la paroi réflectrice 16 est en matériau composite thermoplastique et le film 20 en résine thermoplastique est positionné entre la structure alvéolaire 14 et la paroi réflectrice 16.

Selon un deuxième mode de réalisation, la paroi réflectrice 16 comprend au moins une couche en matériau composite thermodurcissable en contact avec la structure alvéolaire 14 et au moins une couche 22 en matériau thermoplastique.

Pour ce deuxième mode de réalisation, le procédé de fabrication comprend une étape de dépose de la ou des couches en matériau composite thermodurcissable de la paroi réflectrice 16 contre la deuxième face 14.2 de la structure alvéolaire 14 préalablement à la dépose du film 20 en résine thermoplastique. Après la dépose du film 20 sur la ou les couches en matériau composite thermodurcissable de la paroi réflectrice 16, la couche acoustiquement résistive 12, la structure alvéolaire 14, la ou les couches en matériau thermodurcissable de la paroi réflectrice 16 sont polymérisées. Après polymérisation, la ou les couches 22 en matériau composite thermoplastique de la paroi réflectrice 16 sont déposées contre le film 20 et consolidées.

Quel que soit le mode de réalisation, au moins une couche 22 de la paroi réflectrice est en matériau composite thermoplastique et liée au reste du panneau acoustique 10 en matériau composite thermodurcissable par un film 20 en résine thermoplastique.

La ou les couche(s) en matériau composite thermodurcissable qui forment la couche acoustiquement résistive 12 ou une partie de la paroi réflectrice 16 sont déposées manuellement ou de manière automatique.

Le film 20 en résine thermoplastique est déposé manuellement ou de manière automatique. A titre indicatif, le film 20 en résine thermoplastique a une épaisseur comprise entre 25 et 100 µm.

Le film 20 est réalisé en un matériau thermoplastique miscible avec le matériau composite thermodurcissable à la température de polymérisation dudit matériau composite thermodurcissable. Pour donner un ordre de grandeur, la température de polymérisation est de l'ordre de 120°C à 180°C.

Selon un mode de réalisation, le film 20 est en résine polyétherimide dite résine PEI ou en polyfluorure de vinylidène.

L'étape de polymérisation est réalisée en recouvrant d'une vessie l'ensemble formé par la couche acoustiquement résistive 12, la structure alvéolaire 14 et l'éventuelle couche de la paroi réflectrice 16 en matériau composite thermodurcissable, en disposant l'ensemble dans une étuve et en le soumettant à un cycle de température et de pression.

Lors de la phase de polymérisation, on obtient une liaison solide entre le film 20 en résine thermoplastique et la partie du panneau acoustique en matériau composite thermodurcissable.

De préférence, la couche 22 en matériau composite thermoplastique de la paroi réflectrice est consolidée en continu.

A cet effet, la couche 22 en matériau composite thermoplastique et le film 20 en résine thermoplastique sont chauffés localement, concomitamment, juste avant d'être mis en contact. Pour obtenir cette élévation de température, on utilise une source chauffante 24 mobile, comme par exemple une source chauffante de type laser.

Pour obtenir une consolidation en continu, la couche 22 en matériau composite thermoplastique est plaquée contre le film 20 en résine thermoplastique grâce à un rouleau 26 configuré pour presser la couche 22 sur le film 20.

La source chauffante 24 mobile et le rouleau 26 se déplacent de manière synchronisée selon une direction de déplacement 28. La source chauffante mobile 24 est positionnée à l'avant du rouleau 26.

Selon un mode opératoire, la couche 22 en matériau composite thermoplastique est mise en tension avant d'être pressée par le rouleau 26 à un point de contact 30.

Selon un mode de réalisation, la couche 22 en matériau composite thermoplastique est stockée sur une bobine 32. Elle est dévidée de la bobine 32 puis vient au contact du rouleau 26 qui en roulant sur la couche 22 provoque son dévidement. La bobine 32 est équipée d'un système de contrôle du dévidage de la couche 22 pour maitriser la tension T de la couche 22. Grâce à l'élévation de température générée par la source chauffante 24, à la pression exercée par le rouleau 26 et à la mise en tension de la couche 22, un niveau de cristallinité satisfaisant est atteint, permettant d'obtenir une consolidation in situ de la couche 22 en matériau composite thermoplastique. Ainsi, il n'est pas nécessaire de porter l'ensemble du panneau acoustique à une température élevée pour générer la consolidation de la couche 22 en matériau composite thermoplastique qui forme au moins en partie la paroi réflectrice.

## Revendications

1. Procédé de fabrication d'un panneau acoustique comportant au moins une couche acoustiquement résistive (12), au moins une structure alvéolaire (14) et une paroi réflectrice (16), **caractérisé en ce que** le procédé comprend des étapes successives de :
- Dépose d'au moins une couche (18) configurée pour former la couche acoustiquement résistive (12),
- Dépose de la structure alvéolaire (14) en matériau composite thermodurcissable,
- Dépose d'un film (20) en résine thermoplastique configuré pour être miscible avec le matériau composite thermodurcissable à la température de polymérisation dudit matériau composite thermodurcissable,
- Polymérisation des parties du panneau acoustique en matériau composite thermodurcissable,
- Dépose d'au moins une couche (22) en matériau composite thermoplastique contre le film (20) en résine thermoplastique, ladite couche (22) étant configurée pour former au moins une partie de la paroi réflectrice (16),
- Consolidation de la couche (22) et du film (20) en matériau composite thermoplastique pour former la paroi réflectrice (16).

2. Procédé selon la revendication précédente, **caractérisé en ce que** la couche (22) en matériau composite thermoplastique de la paroi réflectrice (16) est consolidée en continu.

3. Procédé selon la revendication précédente, **caractérisé en ce que** la couche (22) en matériau composite thermoplastique et le film (20) en résine thermoplastique sont chauffés localement et concomitamment, juste avant d'être mis en contact.

4. Procédé selon la revendication précédente, **caractérisé en ce que** la couche (22) en matériau composite thermoplastique est plaquée contre le film (20) en résine thermoplastique grâce à un rouleau (26) configuré pour presser la couche (22) sur le film (20).

5. Procédé selon la revendication précédente, **caractérisé en ce que** la couche (22) en matériau composite thermoplastique est mise en tension avant d'être pressée par le rouleau (26).

6. Procédé selon l'une des revendications précédentes, **caractérisé en ce que** le film (20) est en polyétherimide ou en polyfluorure de vinylidène.

7. Procédé selon l'une des revendications précédentes, **caractérisé en ce que** la paroi réflectrice (16) est réalisée en matériau composite thermoplastique, le film (20) de résine thermoplastique étant positionné entre la structure alvéolaire (14) et la paroi réflectrice (16).

8. Panneau acoustique obtenu à partir du procédé selon l'une des revendications précédentes.
